(19) Europäisches Patentamt

European Patent Office

Office européen des brevets

(11) Veröffentlichungsnummer: **0 225 516**
**B1**

(12) **EUROPÄISCHE PATENTSCHRIFT**

(45) Veröffentlichungstag der Patentschrift:
**07.02.90**

(21) Anmeldenummer: **86116049.7**

(22) Anmeldetag: **20.11.86**

(51) Int. Cl.⁴: **F16L 33/04, F16L 3/12**

(54) **Rohrschelle.**

(30) Priorität: **07.12.85 DE 3543382**
**22.01.86 DE 3601815**

(43) Veröffentlichungstag der Anmeldung:
**16.06.87 Patentblatt 87/25**

(45) Bekanntmachung des Hinweises auf die Patenterteilung:
**07.02.90 Patentblatt 90/6**

(84) Benannte Vertragsstaaten:
**AT CH DE ES FR GB IT LI NL**

(56) Entgegenhaltungen:
**DE-A- 3 308 459**
**DE-A- 3 346 423**
**DE-U- 8 223 337**
**DE-U- 8 503 846**
**GB-A- 1 033 659**
**US-A- 2 368 929**
**US-A- 2 835 954**

(73) Patentinhaber: **Müller, Franz, Eichelhäherstrasse 1,
D-6200 Wiesbaden(DE)**

(72) Erfinder: **Müller, Franz, Eichelhäherstrasse 1,
D-6200 Wiesbaden(DE)**

(74) Vertreter: **Jochem, Bernd, Dipl.-Wirtsch.-Ing.,
Patentanwälte Beyer & Jochem Postfach 17 01 45,
D-6000 Frankfurt/Main(DE)**

## Beschreibung

Die Erfindung betrifft eine Rohrschelle, bestehend aus einem ringförmigen Bügel mit wenigstens einer Öffnung, die durch eine Spannschraube schließbar ist, deren Fuß auf der einen Seite der Öffnung in einen fest mit dem Bügel verbundenen Flansch einschraubbar und deren Kopf auf der anderen Seite der Öffnung in ein mit Bezug auf die Mittellängsachse der Rohrschelle radial nach innen offenes Langloch in einem am Bügel angebrachten Vorsprung einhakbar ist.

Eine derartige Rohrschelle ist z.B. in der DE-A 3 308 459 beschrieben. Das Langloch im Vorsprung ist mit Bezug auf die Mittellängsachse der Rohrschelle radial innen offen. Der Kopf der Spannschraube wird beim Einhaken durch ein ausreichend großes Loch im Bügel hindurchgeführt, welches in das Langloch übergeht. Da beide die Öffnung der einteiligen Schelle begrenzenden Flansche bzw. Vorsprünge starr am Bügel angeformt sind, ist selbst bei einer dünnen Rohrschelle die zum Einhaken notwendige Beweglichkeit der Spannschraube nur dann gewährleistet, wenn viel Spiel zwischen dem Rohr und der Rohrschelle vorhanden, also deren Öffnung sehr weit ist. Dies bedingt eine lange Spannschraube und in Anbetracht der großen Zahl der bei einem Bauobjekt normalerweise zu montierenden Rohrschellen eine entsprechend lange Montagezeit zum Anziehen der Spannschrauben und hat außerdem den weiteren Nachteil, daß die im fertig montierten Zustand weit von der geschlossenen Rohrschelle abstehenden Schrauben gegebenenfalls störend oder gefährlich sein können.

Ein zusätzlicher wesentlicher Nachteil der vorbekannten Rohrschellen zeigt sich ebenfalls bei der Montage. Um die Spannschrauben einhaken zu können, hat man sie bisher mit ihrem Fuß relativ beweglich am Bügel angebracht. Während z.B. bei der DE-A 3 346 423 die Beweglichkeit dadurch erhalten wird, daß der Schraubenfuß in ein gelenkig am Bügel gelagertes Teil eingeschraubt wird, läßt sich die Spannschraube bei der Rohrschelle nach der DE-A 3 308 459 nur dann einklinken, wenn der Bügel selbst so dünn und biegsam ist, daß die notwendige Beweglichkeit der Spannschraube gewährleistet ist. Es ist in allen diesen Fällen der relativ beweglichen Lagerung des Spannschraubenfußes jedoch nicht bedacht worden, daß sich diese bei der Montage der Rohrschellen sehr störend auswirkt, wenn mit der einen Hand der bewegliche Teil der Rohrschelle gehalten und mit der anderen Hand ein Werkzeug, z.B. ein Motorschrauber, an der Spannschraube angesetzt werden muß. Bei den bekannten Rohrschellen bereitet in dieser Situation das Ansetzen des Werkzeugs Schwierigkeiten, weil die Spannschraube keine definierte Position hat und infolge ihrer beweglichen Lagerung beim Andruck des Werkzeugs ausweichen kann.

Der Erfindung liegt daher die Aufgabe zugrunde, eine Rohrschelle der eingangs genannten Art zu schaffen, welche sich einfacher und schneller montieren läßt als die bekannten Rohrschellen mit einhakbarer Spannschraube.

Vorstehende Aufgabe wird erfindungsgemäß dadurch gelöst, daß der mit dem Langloch versehene Vorsprung allein oder zusammen mit einem Teil des Bügels mit dessen übrigen Teil über ein Gelenk verbunden ist, dessen Schwenkbereich die Spannstellung und die relative Schrägstellung des Vorsprungs und der Spannschraube bei deren Einführen in das Langloch an seinem radial inneren Ende einschließt.

Infolge der vorgeschlagenen Anordnung des Gelenks auf Seiten des Vorsprungs mit Langloch kann derjenige Teil des Rohrschellenbügels, der den Fuß der Spannschraube trägt, fest und starr ausgebildet sein, so daß sichergestellt ist, daß die Spannschraube bei der Montage eine bestimmte Stellung hat. Sie läßt sich dann z.B. mittels eines Motorschraubers leicht und schnell anziehen.

Besonders günstig sind die Verhältnisse, wenn die Rohrschelle über ein auf derselben Seite der Öffnung wie der den Schraubenfuß tragende Flansch am Bügel angeordnetes Befestigungsglied festgelegt ist. Die Erfindung ist jedoch auch anwendbar auf Rohrschellen, die mittels der Spannschraube an einem tragenden Teil, z.B. einem gelochten Blech oder einem Lochband befestigt werden.

Um auch bei der neuen Rohrschelle mit möglichst kurzen Spannschrauben auszukommen und dadurch die Montagezeit weiter zu verkürzen, ist in bevorzugter Ausgestaltung der Erfindung vorgesehen, daß sich die Erweiterung des Langlochs an dessen inneren Ende, welche die Einführöffnung für den Kopf der Spannschraube bildet, wenigstens teilweise in den Vorsprung hinein erstreckt. Selbstverständlich läßt sich die Erfindung aber auch dann ausführen, wenn diese Erweiterung ganz im Bügel oder vollständig im Vorsprung liegt.

Eine weitere bevorzugte Maßnahme zur Verkürzung der Länge der Spannschraube besteht darin, daß deren Fuß unmittelbar neben dem Bügel in den Flansch einschraubbar ist.

Für die Ausbildung des genannten Gelenks stehen dem Fachmann so zahlreiche und vielfältige Ausführungsvarianten zur Verfügung, daß es sich erübrigt, darauf näher einzugehen. Selbstverständlich eignen sich sämtliche typischen Gelenke mit einem Gelenkbolzen. Daneben kommen aber auch vorzugsweise solche Gelenkverbindungen in Frage, bei denen alle Teile des Gelenks entweder am Bügel oder am Vorsprung angeformt sind. Normalerweise lassen sich derartige Gelenkverbindungen leicht ineinander einhaken, einrasten oder in anderer Weise zum Eingriff bringen und normalerweise auch wieder lösen. Im Hinblick auf die Handhabung der Rohrschelle bei der Montage kann auch eine Begrenzung des Schwenkbereichs des Gelenks im wesentlichen auf den funktionsnotwendigen Schwenkbereich zweckmäßig sein.

Die Erfindung eignet sich selbstverständlich auch für mehrteilige Rohrschellen, die man normalerweise bei größeren und stärkeren Ausführungen vorzieht. Sind z.B. zwei gegenüberliegende Öffnungen vorhanden, kann an jeder von ihnen eine einzuhakende Spannschraube vorgesehen sein. Dann können auch an beiden Vorsprüngen mit Langloch Gelenke angeordnet sein. Daneben besteht aber auch die bevorzugte, einfachere Möglichkeit, nur ein einziges Gelenk im mittleren Bereich desjenigen Bügelteils vorzusehen, an welchem die Vorsprünge mit Langloch angebracht sind.

Die Erfindung wird nachstehend anhand der Zeichnung näher erläutert. Es zeigen:

Fig. 1 einen Teil einer Rohrschelle mit einem Gelenk auf Seiten des Flanschs mit radial innen offenem Langloch, in welches der Kopf der Spannschraube einzuhaken ist;

Fig. 2 und 3 Seitenansichten der Gelenkteile der Rohrschelle nach Fig. 1;

Fig. 4 Seitenansicht einer vollständigen Rohrschelle mit zwei Öffnungen und einem mittleren Gelenk an demjenigen Bügelteil, an welchem auf beiden Seiten Vorsprünge mit radial innen offenen Langlöchern angebracht sind.

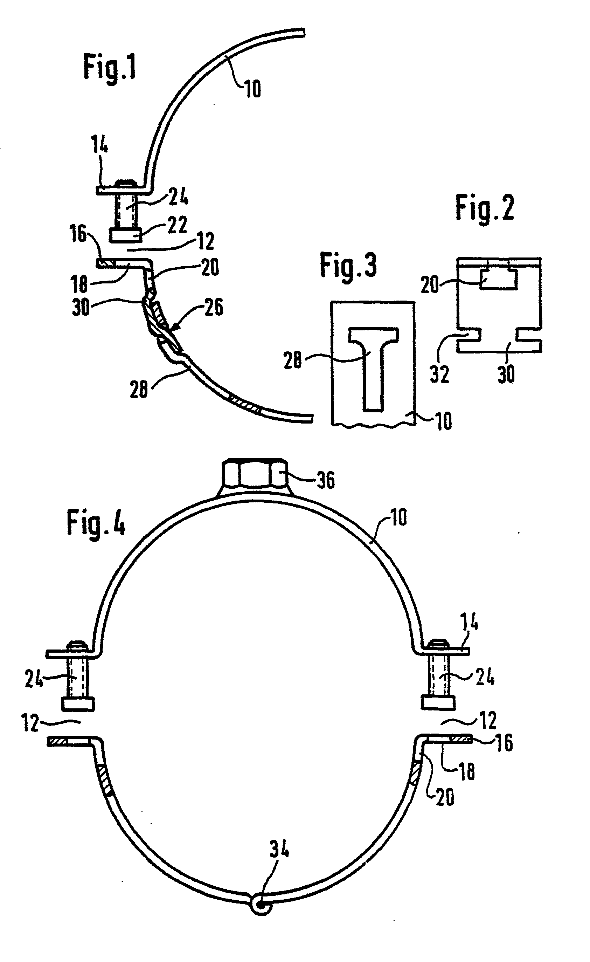

Die in Fig. 1 teilweise gezeigte Rohrschelle hat einen Bügel 10 mit einer oder zwei Öffnungen 12. Jede Öffnung 12 wird begrenzt einerseits durch einen am Bügel 10 angeformten Flansch 14 mit Gewindeloch, andererseits durch einen gelenkig mit dem Bügel 10 verbundenen Vorsprung 16 mit einem radial innen offenen Langloch 18. Die innere Öffnung des Langlochs 18 wird gebildet durch ein im Verhältnis zur Breite des Langlochs verbreitertes Loch 20, welches in das Langloch 18 übergeht. Das Loch 20 ist so bemessen, daß sich der Kopf 22 einer mit dem Fuß in das Gewindeloch im Flansch 14 eingeschraubten Spannschraube 24 hindurchführen läßt, um die Spannschraube in den Vorsprung 16 mit Langloch 18 einzuhaken.

Das Gelenk ist bei der Ausführung nach Fig. 1 insgesamt mit 26 bezeichnet. Um diese Gelenkverbindung zu erhalten, ist bei dem Ausführungsbeispiel der Hauptteil des Bügels 10 mit einem aus der Seitenansicht nach Fig. 3 ersichtlichen T-förmigen Ausschnitt 28 versehen, während der mit 30 bezeichnete verschwenkbare Bügelteil, an welchem der Vorsprung 16 ansetzt, mit zwei gegenüberliegenden, seitlichen Schlitzen 32 versehen ist. Beim Zusammensetzen des Gelenks wird der Teil 30 in Längsrichtung in den T-förmigen Ausschnitt 28 eingeführt, um 90° gedreht und hängt dann unter Berücksichtigung der aus Fig. 1 ersichtlichen gegenseitigen Abkröpfungen schwenkbar am verbreiterten unteren Ende des Ausschnitts 28. Dabei ist durch gegenseitige Anlage der beiden Gelenkteile sichergestellt, daß der Vorsprung 16 nicht weiter als bis in die im wesentlichen radial ausgerichtete Lage gemäß Fig. 1 nach radial einwärts geschwenkt werden kann. Aus dieser Lage ist nur eine Schwenkbewegung des Vorsprungs 16 nach radial außen möglich, um den Schraubenkopf 22 in das Langloch 18 einzuführen.

Abweichend von der Darstellung nach Fig. 1 bis 3 könnte das erweiterte Loch 20 statt vollständig im Umfangsbereich des Bügels 10 auch wenigstens teilweise im Bereich des sich radial erstreckenden Vorsprungs 16 angeordnet sein, falls man mit einer möglichst kurzen Spannschraube 24 auskommen möchte.

Bei Rohrschellen nach Fig. 4 mit zwei gegenüberliegenden Öffnungen besteht auch die Möglichkeit, nur ein einziges, hier mit 34 bezeichnetes Gelenk beliebiger Konstruktions vorzusehen. Es gestattet, beide Spannschrauben 24 gleichzeitig in die jeweils gegenüberliegenden Vorsprünge 16 mit Langloch 18 einzuhaken. Im Beispielsfall sind die Spannschrauben 24 in Gewindelöcher in starr mit der einen Bügelhälfte verbundenen Flanschen 14 eingeschraubt. Während diese Bügelhälfte insgesamt in sich starr ist, befindet sich das Gelenk 34 in der Mitte der anderen Bügelhälfte, an welcher die Vorsprünge 16 mit Langlöchern 18 ansetzen. Bei dieser Konstruktion können die Spannschrauben auf beiden Seiten der Rohrschelle gleichzeitig in die jeweils zugeordneten Langlöcher 18 eingehakt werden.

Auf der dem Gelenk 34 diametral gegeüberliegenden Seite der Rohrschelle ist am Bügel 10 ein Befestigungsglied 36 angebracht. Dieses kann z.B. die Form einer angeschweißten Mutter haben, mittels welcher die Rohrschelle z.B. über einen Gewindebolzen an einer Gebäudedecke, an einer Wand oder einer Tragschiene befestigt werden kann. Die Anordnung des Befestigungsglieds 36 auf derjenigen Seite der Rohrschelle, zu welcher jeweils der Fuß der Spannschrauben weist, hat den Vorteil, daß der Schraubenkopf 22 zum Ansetzen eines Werkzeugs normalerweise gut zugänglich ist. Es versteht sich, daß auch an der Rohrschelle nach Fig. 1 an entsprechender Stelle wie gemäß Fig. 4 ein Befestigungsglied 36 angebracht sein kann. Bei einteiligen Rohrschellen könnte sich das Befestigungsglied 36 aber auch an anderer Stelle, z. B. gegenüber der Öffnung 12, befinden. Es kann fehlen, wenn die Rohrschelle z.B. mittels einer Spannschraube an einem Lochband angehängt oder in anderer Weise befestigt wird.

**Patentansprüche**

1. Rohrschelle, bestehend aus einem ringförmigen Bügel mit wenigstens einer Öffnung, die durch eine Spannschraube schließbar ist, deren Fuß auf der einen Seite der Öffnung in einen fest mit dem Bügel verbundenen Flansch einschraubbar und deren Kopf auf der anderen Seite der Öffnung in ein mit Bezug auf die Mittellängsachse der Rohrschelle radial nach innen offenes Langloch in einem am Bügel angebrachten Vorsprung einhakbar ist, **dadurch gekennzeichnet,** daß der mit dem Langloch (18) versehene Vorsprung (16) allein oder zusammen mit einem Teil (30) des Bügels (10) mit dessen übrigem Teil über ein Gelenk (26, 34) verbunden ist, dessen Schwenkbereich die Spannstellung und die relative Schrägstellung des Vorsprungs (16) und der Spannschraube (24) bei deren Einführen in das Langloch (18) an seinem radial inneren Ende einschließt.

2. Rohrschelle nach Anspruch 1, **dadurch gekennzeichnet,** daß die Öffnung des Langlochs an seinem radial inneren Ende in Form eines erweiterten Lochs (20), durch welches der Kopf (22) der Spannschraube (24) paßt, wenigstens teilweise im Vorsprung (16) angeordnet ist.

3. Rohrschelle nach Anspruch 1 oder 2, **dadurch gekennzeichnet,** daß der Fuß der Spannschraube (24) unmittelbar neben dem Bügel (10) in den fest mit ihm verbundenen Flansch (14) einschraubbar ist.

4. Rohrschelle nach einem der Ansprüche 1 bis 3, **dadurch gekennzeichnet**, daß alle Teile des Gelenks (26) entweder am Bügel (10) oder am Vorsprung (16) angeformt sind.

5. Rohrschelle nach einem der Ansprüche 1 bis 4, **dadurch gekennzeichnet**, daß sie zwei gegenüberliegende, durch Einhaken von Spannschrauben (24) zu schließende Öffnungen (12) hat und ein einziges Gelenk (34) im mittleren Bereich desjenigen Bügelteils vorgesehen ist, an welchem die Vorsprünge (16) mit Langloch (18) angebracht sind.

6. Rohrschelle nach einem der Ansprüche 1 bis 5, **dadurch gekennzeichnet**, daß in an sich bekannter Weise der Bügel (10) mit einem Befestigungsglied (36) versehen ist, welches auf derselben Seite der Öffnung (12) wie der Flansch (14) angeordnet ist, in den der Fuß der Spannschraube (24) einschraubbar ist.

## Claims

1. A pipe clamp, comprising an annular strap with at least one opening which can be closed by a clamping screw, the tip of which can be screwed on one side of the opening into a flange secured to the strap and the head of which on the other side of the opening can be hooked into a slot in a projection attached to the strap, which slot opens radially inwards in relation to the central longitudinal axis of the pipe clamp, characterised in that a projection (16) provided with the slot (18) is by itself or together with a part (30) of the strap (10) connected to the remaining part thereof via a hinge (26, 34), the pivoting range of which includes the clamping position and the relative inclined position of the projection (16) and the clamping screw (24) during its insertion into the slot (18) at its radially inner end.

2. A pipe clamp according to Claim 1, characterised in that the opening of the slot at its radially inner end in the form of an enlarged hole (20), through which the head (22) of the clamping screw (24) fits, is disposed at least partly in the projection (16).

3. A pipe clamp according to Claim 1 or 2, characterised in that the tip of the clamping screw (24) can be screwed, immediately adjacent the strap (10), into the flange (14) secured to the strap.

4. A pipe clamp according to any of Claims 1 to 3, characterised in that all parts of the hinge (26) are formed either on the strap (10) or on the projection (16).

5. A pipe clamp according to any of Claims 1 to 4, characterised in that it has two opposite openings (12) to be closed by the engagement of clamping screws (24), and in that a single hinge (34) is provided in the central region of that part of the strap to which the projections (16) with the slot (18) are attached.

6. A pipe clamp according to any of Claims 1 to 5, characterised in that in per se known manner the strap (10) is provided with a fastening member (36) which is disposed on the same side of the opening (12) as the flange (14) into which the tip of the clamping screw (24) can be screwed.

## Revendications

1. Collier de serrage, se composant d'un étrier de forme annulaire comportant au moins un orifice susceptible d'être obturé à l'aide d'une vis de serrage, dont le pied est susceptible d'être vissé, d'un côté de l'orifice, dans un rebord rigidement relié à l'étrier, et dont la tête est susceptible d'être accrochée, de l'autre côté de l'orifice, dans un trou oblong ouvert radialement vers l'intérieur par rapport à l'axe longitudinal du collier de serrage et pratiqué dans une saillie adjointe à l'étrier, caractérisé en ce que la saillie (16), pourvue du trou oblong (18), est reliée seule ou conjointement avec une partie (30) de l'étrier (10), à sa partie restante, par l'intermédiaire d'une articulation (26, 34) dont la zone de pivotement comprend la position serrée et la position inclinée relative de la saillie (16) et de la vis de serrage (24), lors de leur introduction dans le trou oblong (18) sur son extrémité radiale interne.

2. Collier de serrage selon la revendication 1, caractérisé en ce qu'à son extrémité radialement intérieure, l'orifice du trou oblong en forme d'un trou (20) s'élargissant, à travers lequel la tête (22) de la vis de serrage (24) peut passer est disposé partiellement dans la saillie (16).

3. Collier de serrage selon la revendication 1 ou 2, caractérisé en ce que le pied de la vis de serrage (24) est susceptible d'être vissé directement à côté de l'étrier (10) dans le rebord (14) rigidement relié à ce dernier.

4. Collier de serrage selon l'une des revendications 1 à 3, caractérisé en ce que toutes les parties de l'articulation (26) sont, soit formées d'une seule pièce sur l'étrier, soit sur la saillie (16).

5. Collier de serrage selon l'une des revendications 1 à 4, caractérisé en ce qu'il comporte deux orifices se faisant face (12), s'obturant par accrochage de vis de serrage (24), et qu'il est prévu une articulation unique (34) dans la zone centrale de la partie d'étrier sur laquelle sont adjointes les saillies (16) à trou oblong (18).

6. Collier de serrage selon l'une des revendications 1 à 5, caractérisé en ce que l'étrier (10) est prévu, d'une manière connue en soie, d'un organe de fixation (36) qui est disposé sur le même côté de l'orifice (12) que le rebord (14) dans lequel le pied de la vis de serrage (24) est susceptible d'être vissé.

Fig.1

Fig.2

Fig.3

Fig.4